# FASCICULE DE BREVET EUROPEEN

(11) **EP 1 176 047 B1**
(45) Date de publication et mention de la délivrance du brevet: **27.11.2002**
(21) Numéro de dépôt: 01420158.6
(22) Date de dépôt: 12.07.2001
(51) Int. Cl.: B60N 2/015, B60N 2/08

(54) **Dispositif de guidage et d'ancrage pour siège amovible de véhicule**
Vorrichtung zum Führen und Verankern herausnehmbarer Fahrzeugsitze
Device for guiding and anchoring removable vehicle seats

(30) Priorité: 27.07.2000 FR 0010228
(43) Date de publication de la demande: 30.01.2002
(73) Titulaire: Grupo Antolin-Ingenieria, S.A., 09080 Burgos (ES)
(72) Inventeur: Chabanne, Jean-Pierre, 89710 Champvallon (FR); Duchateau, Jean, 43330 Pont Salomon (FR); Decombe, François, 42350 La Talaudiere (FR)
(74) Mandataire: Perrier, Jean-Pierre

(56) Documents cités:
- EP-A- 0 925 996
- EP-A- 0 947 380
- EP-A- 0 949 111
- EP-A- 0 976 605

## Description

L'invention est relative aux sièges de véhicules automobiles et concerne plus spécialement les sièges amovibles comportant, d'une part, des moyens d'ancrage sur des glissières longitudinales fixées au plancher du véhicule et, d'autre part, des moyens permettant de régler leur position longitudinale avec verrouillage dans la position choisie.

Dans ces sièges, la structure d'assise est solidaire d'un piétement formé par deux sous-ensembles, respectivement droit et gauche, comportant, chacun, des moyens de positionnement par rapport à la glissière correspondante, des moyens de guidage en translation transversale et longitudinale par rapport à la glissière, des moyens de verrouillage sur la glissière, tels que des pênes ou verrous articulés coopérant avec des moyens complémentaires de la glissière, tels que retours, crans ou encoches.

Une telle structure d'assise est décri dans le document EP-A-0 925 996.

Malgré le soin apporté à la fabrication et à la pose des glissières, mais aussi des piétements de chaque siège, le cumul des tolérances de fabrication peut, pour certaines combinaisons siège-glissière, entraîner des coincements ou des passages plus résistants lors du déplacement longitudinal d'un piétement de siège dans les glissières.

De plus, dans le temps, des déformations du plancher peuvent altérer les positions relatives de deux glissières initialement parallèles, en leur donnant une forme en « V » en plan par-dessus, et/ou une inclinaison différente par rapport au plan du plancher, c'est-à-dire générer de nouvelles conditions altérant le glissement et voire même la remise en place lors du positionnement du siège.

Ces inconvénients se rencontrent d'autant plus qu'un siège passager peut occuper une place quelconque sur le plancher, car alors les défauts des glissières s'ajoutent aux défauts des sièges.

La présente invention a pour objet de remédier à cela en fournissant un dispositif de guidage et d'ancrage de siège amovible s'adaptant aux éventuelles déformations et défauts de positionnement des glissières fixées au plancher et supprimant tout risque de coincement et tout défaut de verrouillage sur les glissières, pour toutes les positions pouvant être occupées par un siège.

Ce dispositif s'applique au siège dans lesquels le piétement est composé de deux flasques latéraux portant, chacun, des moyens de positionnement par rapport à la glissière correspondante, des moyens de guidage en translation, respectivement, transversale et longitudinale, par rapport à ces glissières, et des moyens de verrouillage sur la glissière pouvant être amenés en position de déverrouillage par des moyens de commande.

Selon l'invention, l'un des flasques du piétement, dit flasque de guidage, porte directement les moyens de positionnement, les moyens de guidage, et les moyens de verrouillage, tandis que, dans l'autre flasque, dit flasque de rattrapage, ces mêmes moyens sont portés par un ou deux chariots d'ancrage montés flottants en translation transversale par rapport au flasque et sur une course supérieure à la valeur maximale des tolérances de fabrication et de pose de la glissière correspondante, l'unique chariot ou l'un de ces chariots étant relié à ce flasque par un seul axe transversal avec possibilité de pivotement dans le plan vertical pour suivre les variations de niveau vertical de la face de la glissière sur laquelle il prend appui.

Avec cet agencement, le siège amovible est parfaitement guidé en translation longitudinale par son flasque de guidage, mais peut, par le montage respectivement flottant et flottant-pivotant des chariots de son flasque de rattrapage, s'adapter aux variations de positionnement des glissières, sans que cela influe sur ses moyens de verrouillage par rapport à ces glissières.

Dans une forme d'exécution, et avec des glissières présentant, en section transversale, la forme d'un « U » avec deux retours internes, les moyens de verrouillage portés par le flasque de guidage et ceux portés par les chariots flottants du flasque de rattrapage, sont constitués par des verrous pivotants, chaque verrou étant articulé autour d'un axe parallèle à l'axe longitudinal de la glissière et muni d'une extrémité inférieure, en forme de crochet, pénétrant dans l'intervalle entre les ailes de la glissière et coopérant avec l'une des encoches ménagées dans ces ailes.

Grâce à la disposition des encoches dans les ailes verticales de la glissière, la résistance générale de la glissière est beaucoup moins affectée que lorsque ces encoches sont réalisées dans ses retours supérieurs, et lesdites encoches peuvent être réparties avec un pas plus petit en augmentant le nombre de positions longitudinales verrouillées pouvant être données au siège.

Avantageusement, l'extrémité, en forme de crochet de chacun des verrous pivotants, est munie, en complément de ce crochet, d'un pêne de retenue apte à venir sous le retour interne de la glissière solidaire de l'aile portant l'encoche avec laquelle le crochet coopère.

En cas de choc pendant le réglage longitudinal de la position du siège, les moyens de verrouillage, bien qu'en position déverrouillée, continuent à participer à la retenue du siège dans les glissières.

Dans une forme d'exécution de ce dispositif, le chariot flottant, lié en rotation et translation longitudinale au flasque de rattrapage, porte un axe cylindrique transversal avec une portée cylindrique extrême sur laquelle est montée libre en rotation une roulette apte à rouler sur la glissière, tandis que le chariot flottant et articulé, porte deux axes transversaux munis chacun d'une portée cylindrique extrême sur laquelle est montée libre en rotation une roulette apte à rouler sur la glissière, les portées cylindriques des trois axes transversaux recevant les roulettes étant excentrés par rapport à l'axe géométrique de l'axe, afin que le pivotement partiel de chaque axe, puis son blocage, permettent de régler la position verticale de la roulette correspondante par rapport au flasque, donc au siège.

Les portées excentrées permettent au montage, et si besoin est en atelier après fonctionnement, de modifier la position verticale des axes de rotation des roulettes pour régler le jeu vertical entre les verrous et crochets et le dessous du retour interne des ailes de la glissière, et limiter le jeu de débattement en haut du dossier.

Avantageusement, les roulettes équipant au moins le chariot du flasque de rattrapage font parties d'une série de roulettes ayant le même diamètre d'alésage, mais se différenciant par leur diamètre extérieur allant en croissant d'une valeur au plus égale à celle de l'excentration de la portée cylindrique les recevant.

Ainsi, lors du montage du siège, s'il se révèle que les réglages obtenus par modification de la position de la portée excentrée recevant les roulettes sont insuffisants, il est possible de remplacer l'une ou toutes les roulettes par des roulettes de plus grand diamètre en conservant le réglage fin procuré par le pivotement des portées excentrées.

D'autres caractéristiques et avantages ressortiront de la description qui suit en référence au dessin schématique annexée représentant, à titre d'exemple, une forme d'exécution de ce dispositif d'ancrage.
Figure 1 est une vue partielle de face en bout d'un siège équipé du dispositif,
Figure 2 est une vue en perspective d'un élément du piétement montrant le flasque de guidage posé sur une glissière, avec sa tôle de fermeture mais sans ses moyens intérieurs,
Figure 3 est une vue de côté en élévation par l'intérieur de l'autre élément du piétement montrant le flasque de rattrapage,
Figure 4 est une vue en perspective par-dessous de la structure du piètement du siège,
Figure 5 est une vue en perspective montrant, par l'intérieur, le flasque de guidage, sans sa tôle de fermeture pour faire voir les moyens qu'il contient,

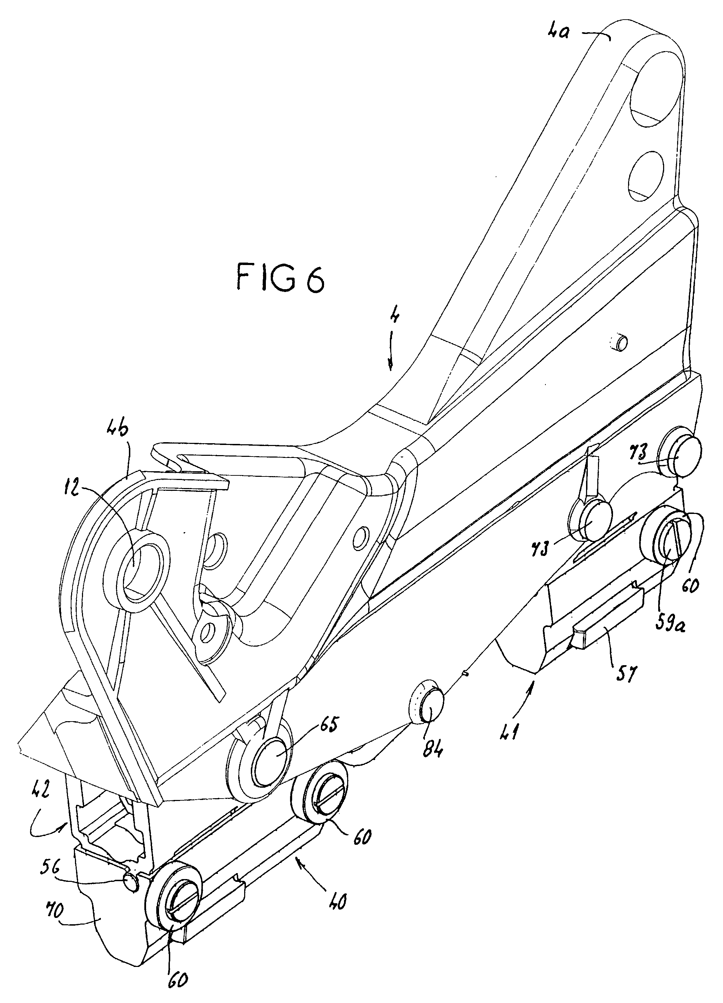

Figure 6 est une vue en perspective, par l'extérieur, du flasque de rattrapage,
Figure 7 est une vue en perspective éclatée, avec coupes brisées des deux chariots du flasque de rattrapage avec les moyens de commande du verrou et des crochets de retenue,
Figures 8 à 14 sont des vues partielles, à échelle agrandie, en coupe suivant, respectivement VIII-VIII, IX-IX, X-X, XI-XI, XII-XII, XIII-XIII, XIV-XIV de figure 3,
Figure 15 est une vue en coupe suivant XV-XV de figure 5 montrant, à échelle agrandie, une forme d'exécution des moyens de calage de la coulisse d'un flasque.

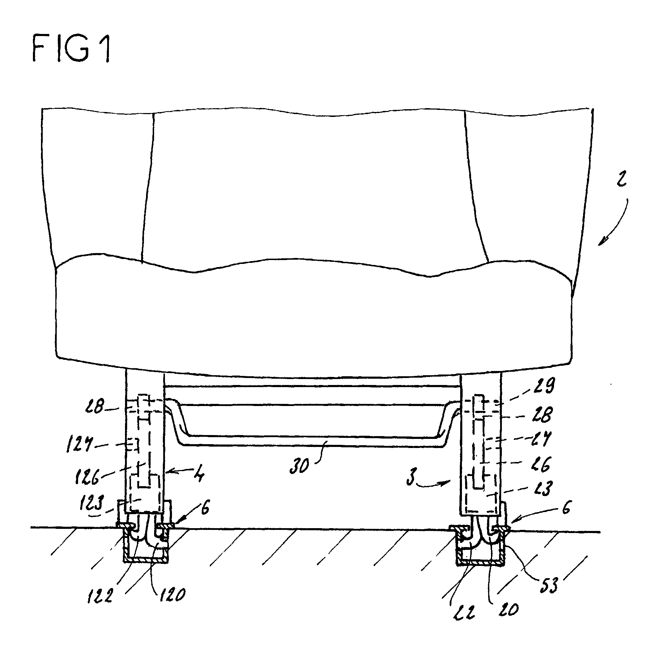

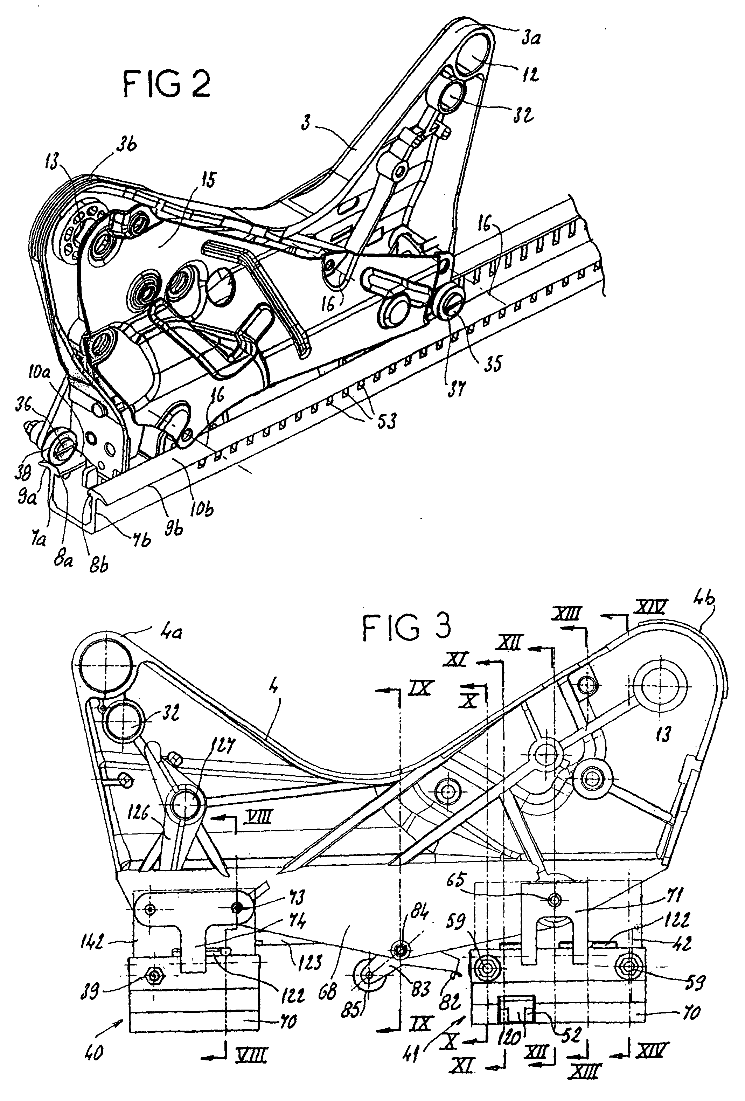

Comme montré à la figure 1, la structure du siège 2 est solidaire d'un piétement composé de deux flasques respectivement, de guidage 3 et de rattrapage 4, comportant des moyens coopérant avec des glissières longitudinales 6. Dans la forme d'exécution représentée, en particulier figure 2, chaque glissière présente, en section transversale, la forme générale d'un « U » dont les deux ailes verticales 7a, 7b sont verticales et sont munies à leurs extrémités supérieures, d'une part, d'un retour interne respectivement 8a, 8b, d'autre part, d'un retour externe 9a, 9b, et de plus, d'une face plane supérieure 10a, 10b, formant chemin de roulement, mais pouvant aussi former chemin de glissement.

Les figures 2 à 4 montrent que chacun des flasques présente, en vue de côté, la forme générale d'une crosse, c'est-à-dire présente une pointe 3a, 4a tournée vers l'avant, et une pointe 3b, 4b tournée vers l'arrière, séparée par une partie centrale concave et comporte, dans chacune de ses pointes, un alésage respectivement avant 12 et arrière 13 pour, respectivement, un axe de liaison avec la structure du siège, et l'articulation 11 de la structure de dossier 14.

Chaque flasque est en forme de boîtier ouvert vers l'intérieur. L'ouverture de celui 3 est obturée par une tôle de fermeture 15 comportant des nervures de rigidification. Cette tôle est liée au flasque 3 par des moyens de liaison démontable, tels que vis, matérialisés par des traits mixtes 16 (figure 2).

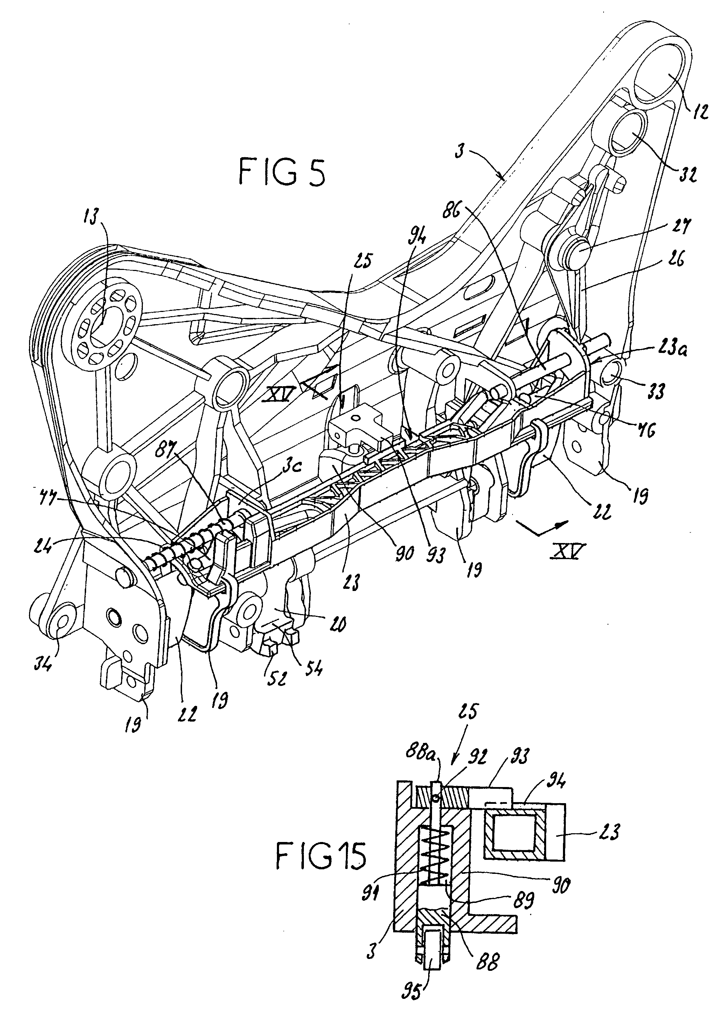

Comme montré plus en détails figure 5, le flasque de guidage 3 porte directement :
- à ses extrémités, des plaquettes verticales et transversales 19 facilitant son positionnement dans la glissière correspondante,
- un verrou 20 monté pivotant autour d'un axe géométrique parallèle à l'axe longitudinal du flasque et de la glissière,
- des crochets de retenue 22, également montés pivotants autour d'un axe géométrique longitudinal,
- une coulisse 23 de commande de pivotement du verrou 20, et des crochets 22,
- des moyens de rappel à ressort 24 de la coulisse 23,
- des moyens 25 de calage de la coulisse 23 dans sa position correspondant au blocage du verrou 20 et des crochets 22 dans une position de dégagement, permettant leur engagement ou dégagement de la glissière,
- et un levier intermédiaire 26, articulé sur le flasque autour d'un axe transversal 27 et dont l'extrémité inférieure vient en appui sur la face en bout avant 23a de la coulisse 23.

Comme montré schématiquement à la figure 1, l'extrémité supérieure du levier 26 reçoit l'appui d'un ergot radial 28, calé sur un tourillon 29 d'une barre de commande 30 s'étendant sous le siège 2. Ce tourillon est monté libre en rotation dans l'alésage 32 du flasque, visible à la figure 5.

Enfin, la flasque 3 porte deux paliers, respectivement avant 33 et arrière 34 recevant, comme montré figure 2, un axe respectivement 35 et 36 dont l'extrémité forme portée de guidage pour un galet, respectivement 37, 38. Ces deux galets viennent en appui sur les chemins de roulement de la glissière correspondante, à savoir sur le chemin de roulement 10a pour le galet 38, et sur le chemin de roulement 10b de la même glissière pour le galet 37.

La description détaillée des éléments 20 à 25 portés par le flasque 3 sera reprise ultérieurement par comparaison avec les éléments similaires du flasque de rattrapage 4.

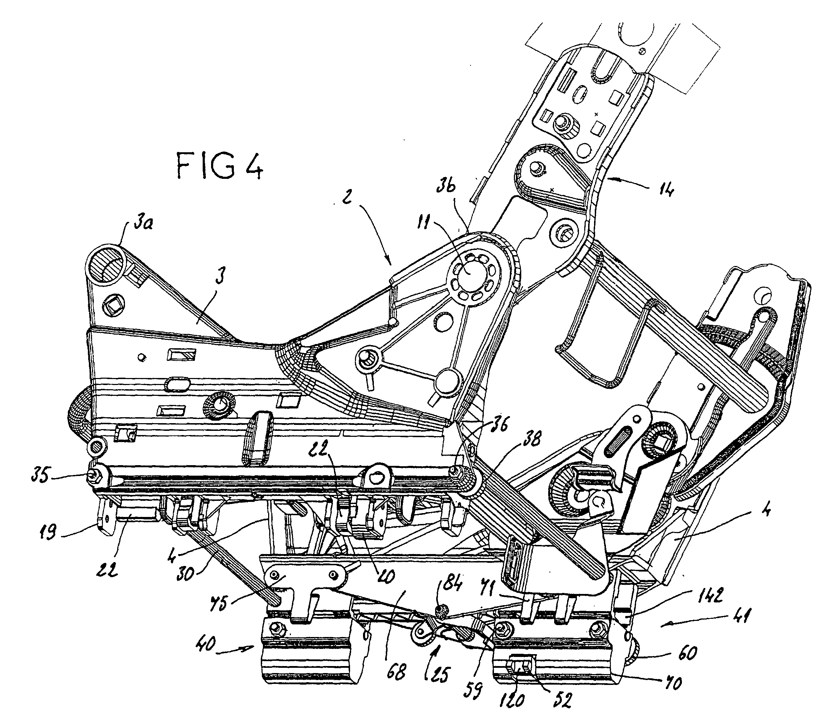

En effet, et comme montré de manière générale à la figure 4, dans le flasque de rattrapage 4 les moyens de positionnement, les moyens de guidage en translation longitudinale et les moyens de verrouillage, sont portés par deux chariots, respectivement, antérieur 40 et postérieur 41.

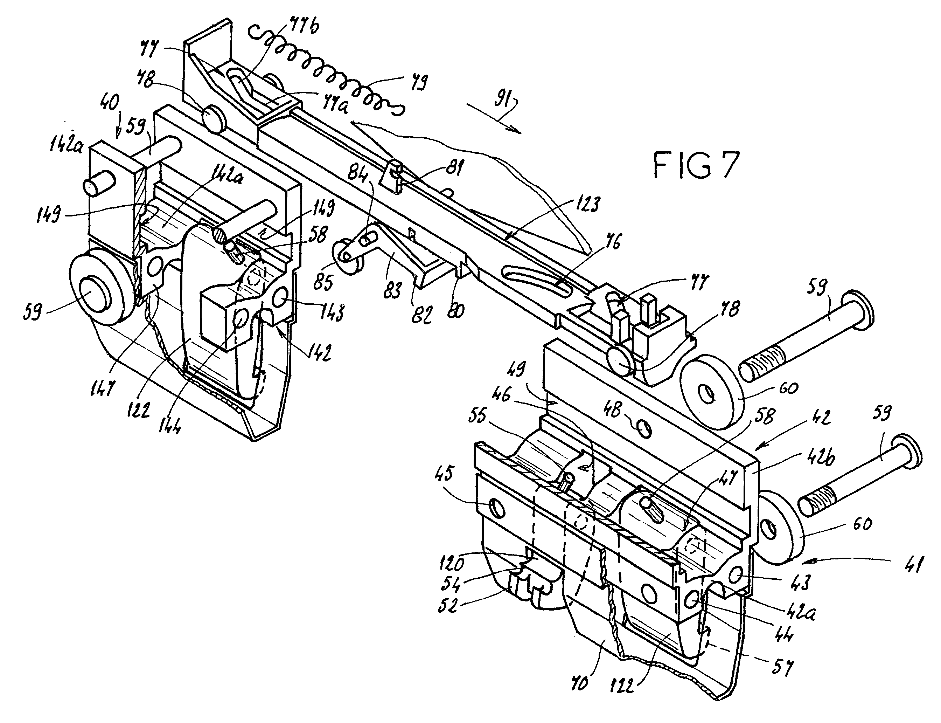

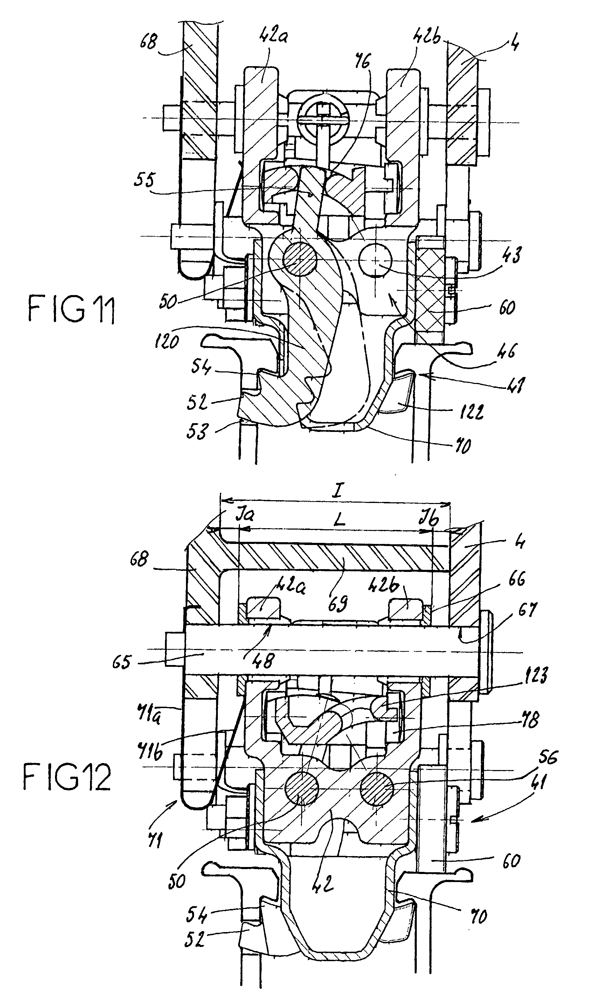

Comme montré, en détails, aux figures 7 et 10 à 14, le chariot postérieur 41 comprend un corps 42 présentant, en section transversale, la forme générale d'un « U » dont l'âme 42a est traversée longitudinalement par des alésages cylindriques, respectivement 43 et 44, transversalement par deux alésages cylindriques 45 et verticalement par deux logements traversant 46, 47. Les deux ailes 42b sont traversées, chacune, par un alésage transversal 48 et comportent chacune une rainure longitudinale interne 49 faisant vis à vis à la rainure de l'autre aile. Le logement 46 contient un verrou 120, identique au verrou 20 du flasque 3. Ce verrou est articulé autour d'un axe 50 (figure 11), disposé dans l'alésage longitudinal 44. Il s'étend verticalement vers le bas et sa partie inférieure, pénétrant dans l'intervalle entre les deux ailes 7a, 7b de la glissière, comme montré à la figure 11, est aménagée en forme de crochet, et en particulier, en forme de crochet double 52. Chacun de ces crochets est destiné à pénétrer dans l'une des encoches 53 ménagées, comme montré figure 2, dans chacune des ailes 7a, 7b de la glissière correspondante. Ces crochets sont associés à un redan supérieur 54, formant pêne de retenue. Ce pêne est apte, en cas de choc, à venir en appui sous le retour interne correspondant 8a ou 8b de la glissière pour retenir le piétement et le siège.

Dans sa partie supérieure, le verrou 120 est solidaire d'un doigt radial 55, saillant vers le haut.

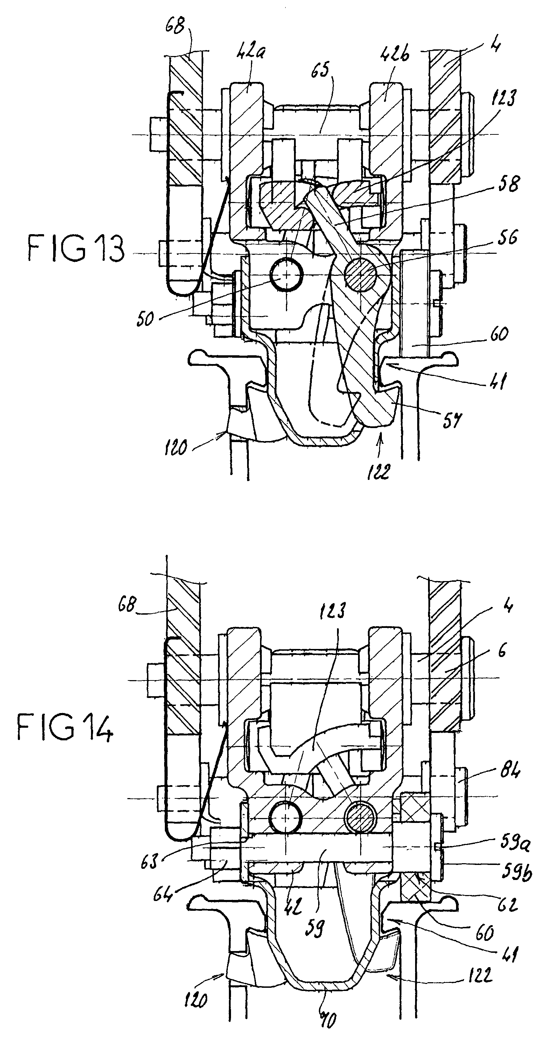

Le logement 47 du corps 42 de chariot contient un crochet de retenue 122, de forme identique au crochet 22 du flasque de guidage 3. Comme montré figure 13, ce crochet est articulé sur un axe 56, disposé dans l'alésage 43 du corps. A sa partie inférieure, il comporte un redan 57 formant crochet et apte, comme le redan 54 du verrou, à venir au-dessous du retour interne 8a, 8b de la glissière correspondante. A sa partie supérieure, il est muni d'un doigt radial 58, saillant vers le haut.

Comme montré à la figure 7, les alésages 45 du corps sont destinés à recevoir deux axes transversaux 59 servant de pivots pour deux roulettes 60.

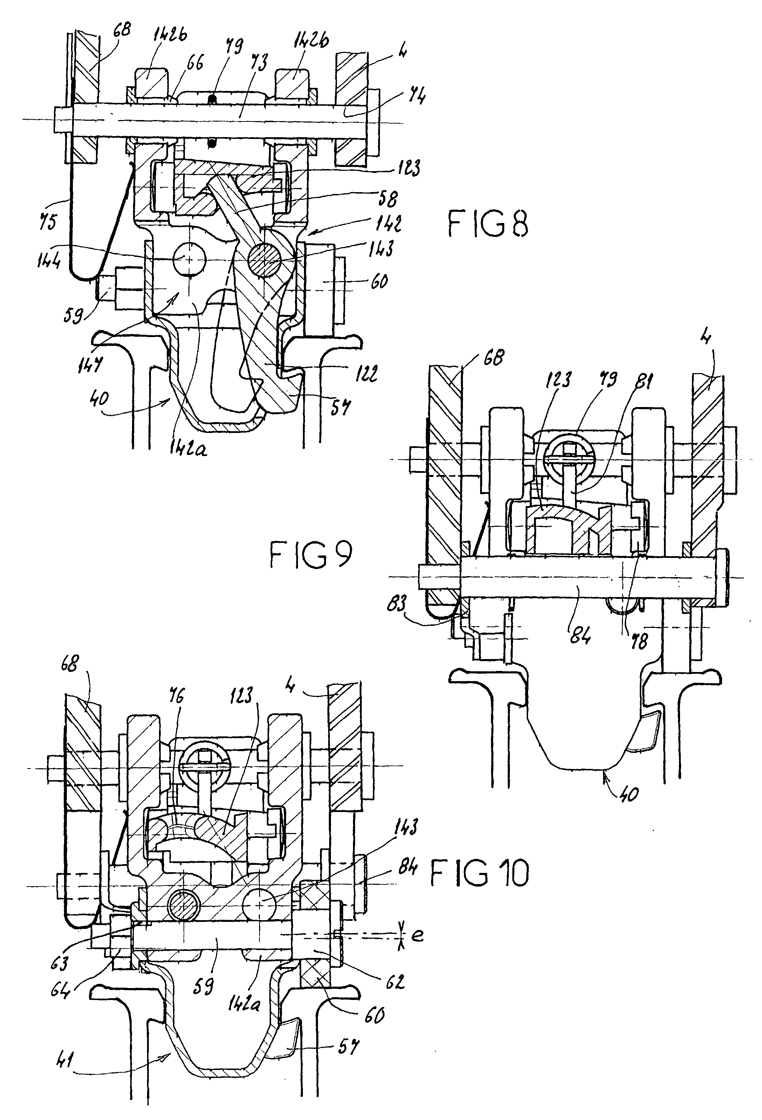

Dans la forme d'exécution représentée aux figures 10 et 14, chaque axe 59 guide en rotation la roulette 60 correspondante par une portée cylindrique 62 qui est excentrée d'une valeur e par rapport à son axe géométrique. A son autre extrémité, l'axe 59 est équipé d'un méplat 63 permettant de repérer la position angulaire de cet axe, donc de la portée excentrique, et en conséquence, de procéder au réglage de la position de l'axe de rotation de la roulette par rapport au chariot. La fente 59a, ménagée dans la tête 59b de l'axe, participe également au repérage de la position de réglage de la roulette.

Après réglage, l'axe 59 est bloqué en position, par exemple, par un écrou 64.

Enfin, comme montré figure 12, les alésages 48 ménagés dans les ailes 42b du corps de chariot servent de logements à des paliers 66 pour un axe traversant 65. Les extrémités de cet axe 65 sont portées par des alésages 67 ménagés, l'un dans la partie inférieure du flasque 4 et l'autre dans une joue 68 disposée parallèlement au flasque et liée à lui par une paroi 69. Le flasque, la joue et la paroi forment une coiffe en « U » retourné contenant les chariots.

La figure 12 montre bien que l'intervalle I entre le flasque 4 et sa paroi 68 est supérieur à la largeur L du chariot 41, de manière que soient ménagés, de chaque côté du chariot, des jeux Ja, Jb, lui permettant de se déplacer transversalement en lui donnant son caractère flottant. Une lame ressort pliée en « V » 71 est liée par sa branche 71a à la joue 68 et prend appui, par sa branche 71b, sur le chariot 41 pour le ramener dans une position sensiblement médiane, facilitant son engagement dans la glissière dans la phase de mise en place du siège.

Enfin, le chariot 41 est équipé d'un moyen de positionnement qui, dans la forme d'exécution représentée, est constitué par une coiffe en matière plastique 70, formant une sorte de boîtier de protection des éléments pivotants du chariot qui, le traversent par des ouvertures appropriées, mais il est évident que ces moyens de positionnement peuvent présenter toute autre forme et, par exemple, être constitués par une plaquette en matière plastique présentant la même section transversale que la coiffe, mais rapportée sur le chariot.

Le chariot 40, visible figures 7 et 8, comprend un corps 142 ayant la même section transversale que le corps 42 du chariot 41 et dont l'âme 142a est traversée par deux alésages longitudinaux 143, 144 et par un logement vertical traversant 147 pour un crochet de retenue 122. Comme montré figure 7, l'âme 142a est également traversée par un alésage transversal pour un axe 59 recevant une roulette 60. Les deux ailes 142b du corps sont traversées par des alésages transversaux alignés deux à deux et recevant chacun un palier 66. Comme le montre la figure 8, dans ces paliers sont montés deux axes transversaux 73. Chaque axe est disposé, par ses extrémités, dans des alésages 74 ménagés dans le flasque 4 et dans sa joue 68. Ces deux axes forment des glissières sur lesquelles le chariot 40 peut coulisser transversalement pour s'adapter aux différences de position transversale de la glissière par rapport au siège ou inversement. Une lame ressort 75 assure la même fonction que la lame 71 de l'autre chariot 41.

Ce chariot 40 comporte aussi des rainures longitudinales 149, ménagées dans ses ailes et se faisant vis à vis.

Comme le verrou 20 et les crochets de retenue 22 du flasque de guidage 3, le verrou 120 et les doigts de retenue 122 du flasque de rattrapage 4 ont un pivotement qui est commandé par une coulisse 123, disposée au-dessus d'eux. Comme montré figure 7, cette coulisse comporte, dans son âme, une lumière 76 et deux lumières 77. La glissière est munie à ses extrémités de roulettes 78 circulant dans les rainures 49 et 149 ménagées dans les ailes des deux chariots 40, 41.

Lorsque la coulisse est en place, les lumières 76, 77 sont traversées, chacune, par l'un des doigts 55, 58, respectivement du verrou et des crochets de retenue, comme montré aux figures 8, 11 et 13. Les bords de ces lumières forment des rampes qui, lors du déplacement de la coulisse, peuvent venir en contact avec le doigt correspondant, pour le déplacer transversalement et provoquer le pivotement du verrou ou crochet correspondant.

La figure 7 fait bien apparaître que la lumière 76 pour le verrou 120 est inclinée transversalement sur toute sa longueur, par rapport à l'axe longitudinal de la coulisse 123 et présente des bords sensiblement rectilignes, alors que les lumières 77 pour les crochets 122 sont composées chacune d'un tronçon longitudinal 77a et d'un tronçon incliné 77b. Chaque tronçon longitudinal 77a a une longueur au moins égale à la course de déplacement longitudinal que doit effectuer la coulisse 123 pour amener le verrou de sa position de verrouillage à sa position de déverrouillage.

Ainsi, lorsque la coulisse 123 est déplacée pour commander le basculement du verrou 120 de sa position de verrouillage à sa position de déverrouillage, les crochets de retenue 122 ne sont pas pivotés, puisque alors leurs doigts 58 circulent dans la partie longitudinale 77a des lumières 77, tandis que, lorsque la coulisse est déplacée pour amener le verrou 120 de sa position de déverrouillage à une position de dégagement et d'extraction, représentée en traits mixtes à la figure 11, les crochets 122 sont amenés par pivotement dans la position d'extraction représentée en traits mixtes figure 17, par coopération de leurs doigts 58 avec les bords des parties inclinées 77b des lumières 77.

Comme montré à la figure 7, la coulisse est solidaire d'un doigt d'accrochage 81 saillant vers le haut et sur lequel est accrochée l'une des extrémités d'un ressort de traction 79, accroché, par son autre extrémité, à un point fixe du flasque et, par exemple, à un axe 73, comme montré à la figure 8.

Dans sa partie inférieure, la coulisse 123 est équipée d'un talon 80, apte à coopérer avec une barrette de calage 82 faisant partie d'un palpeur de présence de la glissière.

Dans la forme d'exécution représentée figures 4 et 7, ce palpeur est constitué par un levier coudé 83, monté pivotant sur un axe transversal 84 tourillonnant dans le flasque 4 et sa joue 68. Ce levier porte la barrette 82, à l'extrémité de sa branche sensiblement horizontale, tandis que l'extrémité de sa branche sensiblement verticale est équipée d'une roulette 85. Lorsque la coulisse est manoeuvrée pour amener le verrou 120 et les leviers 122 en position d'extraction, et est déplacée dans le sens de la flèche 91 à l'encontre de l'effort de rappel du ressort 79, son talon 80 passe sur la barrette 82 qui bascule et s'efface. Dès que ce déplacement est terminé, la coulisse est ramenée par le ressort 79 jusqu'à ce que le talon 80 vienne en butée sur la barrette 82, en assurant ainsi l'immobilisation en position d'extraction du verrou 120 et des crochets 122. Cela facilite l'extraction du siège par rapport à la glissière et ultérieurement la remise en place des verrous et crochets dans la glissière, tout en évitant de former, sur le piétement du siège, des protubérances pouvant accrocher d'autres éléments.

Le déplacement de la coulisse 123 est assuré par un levier 126, visible à la figure 3, et articulé sur le flasque 4 par un axe 127. Ce levier 126 est actionné simultanément au levier 26 par la même barre de commande 30.

La figure 5 montre que la coulisse 23 du flasque de guidage 3 est montée coulissante sur des glissières cylindriques 86 et 87 s'étendant entre des ailes transversales 3c du flasque, et que le rappel de la glissière est assuré par le ressort 24 qui est disposé autour de la glissière 87. La coulisse comporte également des lumières 76, 77 qui commandent le basculement du verrou 20 et des crochets de retenue 22 en coopérant avec les doigts de ces éléments.

Les moyens de blocage de la coulisse 23, dans sa position de maintien du verrou 20 et des crochets 22 en position d'extraction, sont réalisés différemment, comme montré plus en détails à la figure 15. Les moyens de palpage, venant en contact avec la glissière lorsque le siège est amené sur celle-ci sont constitués par un piston 88, monté coulissant dans un alésage vertical épaulé 89, ménagé dans une excroissance 90 du flasque 3. La tige 88a du piston 88 est liée, par exemple par une goupille transversale 92, à un doigt transversal 93 s'étendant au-dessus de la trajectoire de la coulisse 23. Un ressort 91, interposé entre le piston 88 et le fond du logement 89, sollicite en permanence ce piston vers le bas, de manière que son doigt 93 vienne en appui sur le bord de la coulisse 23. Ce bord est équipé localement d'un cran 94, visible figure 5, qui reçoit le doigt 93 lorsque la coulisse est déplacée pour commander la mise en position de dégagement et d'extraction du verrou 20 et des crochets de retenue 22. A l'inverse, lors de la mise en place du siège sur les glissières, le contact de l'extrémité du piston 88 avec le chemin de roulement de la glissière provoque la rétraction du piston 88 dans son logement 89 et le dégagement de son doigt 93 du cran 94, c'est-à-dire permet au ressort de rappel 24 de provoquer le déplacement de la coulisse pour amener automatiquement le verrou 20 et les crochets de retenue 22 en position, respectivement de verrouillage et de retenue verticale du piétement du siège. L'extrémité du piston 88 est munie d'une roulette 95 pour éviter que les déplacements de réglage du piétement sur la glissière soient freinés par le contact de ce piston avec la glissière et que la glissière soit rayée par ce piston.

Lorsqu'un siège équipé de ce dispositif de guidage et d'ancrage est mis en place sur deux glissières parallèles, son positionnement s'effectue très aisément par les plaquettes 19 équipant le flasque 3 et les boîtiers 70 équipant les chariots du flasque de rattrapage 4. Dès que les verrous 20, 120 et les crochets de retenue 22, 122 sont engagés entre les ailes des deux glissières, et que les palpeurs, respectivement 88, 83, détectent la présence des glissières et libèrent les coulisses 23, 123, les ressorts 24, 79 sollicitant ces coulisses provoquent le déplacement longitudinal de celles-ci et, en conséquence, la mise en position de verrouillage des verrous et la mise en position de retenue des crochets. Il suffit alors de déplacer légèrement le siège jusqu'à ce que les crochets double 52 pénètrent dans les encoches 53 des glissières et assurent le verrouillage.

Pour régler la position du siège, il suffit d'actionner la barre de commande 30 pour provoquer le déplacement des leviers 26 et 126 et le déplacement des coulisses 23, 123 amenant les seuls verrous 22, 122 dans leur seule position de déverrouillage. Lors du déplacement du chariot longitudinal du siège sur les glissières, le flasque de guidage 3 coopère avec sa glissière pour assurer le guidage en translation de ce déplacement, tandis que les chariots flottants 40 et 41 du flasque de rattrapage 4 absorbent, par leur déplacement transversal, la variation de distance entre les deux glissières et que, simultanément, le chariot pivotant 41 absorbe, par son pivotement, les variations de niveau de la face supérieure de la glissière sur laquelle il roule.

Enfin, et pour compléter les réglages effectués au montage par pivotement des portées excentriques 62 sur lesquelles sont montées les roulettes 37, 38 et 60, des chariots 40, 41 et éventuellement, celles portant les roulettes 37, 38 du flasque de guidage, ces roulettes sont choisies parmi une série de roulettes ayant le même diamètre d'alésage, mais ayant des diamètres extérieurs allant en croissant par palier de valeur au plus égale à celle de l'excentration e de la portée excentrée. Ainsi, par exemple, si la portée cylindrique a un diamètre de 12 millimètres et est excentrée de 4 millimètres par rapport à l'axe 59 ayant un diamètre de 8 millimètres, les roulettes 37, 38 et 60, ayant un diamètre nominal de 26 millimètres, sont choisies parmi des roulettes ayant des diamètres de 23, 26 et 29 millimètres.

Dans une variante de réalisation, non représentée, le flasque de rattrapage porte un unique chariot, similaire au chariot 40, mais plus long, et lié au flasque par un seul axe d'articulation. Les extrémités avant et arrière du flasque reposent sur celles du chariot avec interposition de moyens amortisseurs du mouvement de pivotement, ces moyens étant associés à des butées limitant la course de pivotement.

## Revendications

1. Dispositif de guidage et d'ancrage de siège de véhicule, ledit siège étant amovible par rapport à deux glissières longitudinales (6) parallèles fixées au plancher, et étant muni d'un piétement composé de deux flasques latéraux (3, 4) portant chacun des moyens de positionnement par rapport à la glissière correspondante, des moyens de guidage en translation, respectivement transversale et longitudinale, par rapport à cette glissière, et des moyens de verrouillage sur la glissière pouvant être amenés en position de déverrouillage par des moyens de commande, **caractérisé en ce que,** l'un des flasques du piétement, dit flasque de guidage (3), porte directement les moyens de positionnement (19, 70), les moyens de guidage (37, 38), et les moyens de verrouillage (22), tandis que, dans l'autre flasque, dit flasque de rattrapage (4), ces mêmes moyens sont portés par un ou deux chariots d'ancrage (40, 41) montés flottants en translation transversale par rapport au flasque et sur une course supérieure à la valeur maximale des tolérances de fabrication et de pose de la glissière (6) correspondante, l'unique chariot ou l'un de ces chariots (41) étant relié à ce flasque (4) par un seul axe transversal (65) avec possibilité de pivotement dans le plan vertical pour suivre les variations de niveau vertical de la face (10a, 10b) de la glissière (6) sur laquelle il prend appui.

2. Dispositif selon la revendication 1, **caractérisé en ce que** chacun des chariots flottants d'ancrage (40, 41) est associé à des moyens de rappel à ressort (71, 75) le sollicitant en permanence pour le ramener dans une position médiane sur ses moyens de guidage en translation transversale, portés par le flasque de rattrapage (4), à savoir un axe d'articulation (65) pour le chariot pivotant (41) et deux axes transversaux pour l'autre chariot (40).

3. Dispositif selon la revendication 1, **caractérisé en ce que**, avec des glissières (6) présentant, en section transversale, la forme d'un « U » avec deux retours internes (8a, 8b), les moyens de verrouillage portés par le flasque de guidage (3) et ceux portés par les chariots flottants (40, 41) du flasque de rattrapage (4), sont constitués par des verrous pivotants (20, 120), chaque verrou étant articulé autour d'un axe (50) parallèle à l'axe longitudinal de la glissière et muni d'une extrémité inférieure, en forme de crochet (52), pénétrant dans l'intervalle entre les ailes (7a, 7b) de la glissière (6) et coopérant avec l'une des encoches (53) ménagées dans ces ailes.

4. Dispositif selon la revendication 3, **caractérisé en ce que** l'extrémité en forme de crochet (52) de chacun des verrous pivotants (20, 120) est munie, en complément de ce crochet, d'un pêne de retenue (54) apte à venir sous le retour interne correspondant de la glissière.

5. Dispositif selon la revendication 1, **caractérisé en ce que**, à chacun des moyens de verrouillage (20, 120) respectivement, du flasque de guidage (3) et du flasque de rattrapage (4), est associé à un crochet pivotant (22, 122) de retenue verticale, ledit crochet étant articulé autour d'un axe (44, 144) parallèle à l'axe longitudinal de la glissière (6) et, par son extrémité inférieure en forme de crochet (57), étant apte à venir sous l'un des retours internes (7a, 7b) de ladite glissière (6).

6. Dispositif selon l'ensemble des revendications 1 à 5, **caractérisé en ce que** les moyens de commande de déverrouillage des verrous pivotants et des crochets de retenue comprennent, dans chacun des deux flasques (3, 4), une coulisse de commande (23, 123) associée :
a) à des moyens à ressort (24, 79) la rappelant en position de verrouillage,
b) à des moyens (93, 82) de calage en position d'extraction déblocable par un palpeur (88, 83) de présence de la glissière,
c) à un levier intermédiaire (26, 126), articulé par rapport au flasque (3, 4) autour d'un axe transversal (27), l'extrémité inférieure de ce levier étant en appui sur la coulisse alors que son extrémité supérieure est en appui sur des moyens (30) de commande manuelle communs aux deux flasques,
ladite coulisse (23, 123) étant disposée au-dessus des verrous (20, 120) et crochets (22, 122) et comportant des lumières (76, 77) dont les bords aménagés en rampes de commande coopèrent avec des doigts (55, 58) saillant vers le haut, à partir, respectivement des verrous (20, 120) et des crochets (22, 122).

7. Dispositif selon la revendication 6, **caractérisé en ce que** chacune des rampes (77) coopérant avec le doigt (58) de l'un des crochets de retenue (22, 122) comporte une partie longitudinale (77a), sans effet sur le basculement du crochet, et correspondant à la course de la coulisse pour amener le verrou de la position de verrouillage à la position de déverrouillage ou inversement, cette partie longitudinale (77a) étant suivie par une partie inclinée (77b) faisant pivoter le crochet de sa position de retenue à une position de dégagement favorisant son extraction.

8. Dispositif selon la revendication 1, **caractérisé en ce que** le chariot flottant (40), lié en rotation et translation longitudinale au flasque de rattrapage (4), porte un axe cylindrique transversal (59) avec une portée cylindrique extrême (62) sur laquelle est montée libre en rotation une roulette (60) apte à rouler sur la glissière (6), tandis que le chariot (41) flottant et articulé, porte deux axes transversaux (59) munis chacun d'une portée cylindrique extrême (62) sur laquelle est montée libre en rotation une roulette (60) apte à rouler sur la glissière (6), les portées cylindriques (62) des trois axes transversaux (59) recevant les roulettes étant excentrés par rapport à l'axe géométrique de l'axe, afin que le pivotement partiel de chaque axe (59), puis son blocage, permettent de régler la position verticale de la roulette correspondante par rapport au flasque, donc au siège.

9. Dispositif selon la revendication 8, **caractérisé en ce que** au moins les roulettes (60) équipant les chariots (40, 41) du flasque de rattrapage (4), font parties d'une série de roulettes ayant le même diamètre d'alésage, mais se différenciant par leur diamètre extérieur allant en croissant d'une valeur au plus égale à celle de l'excentration (e) de la portée cylindrique (62) les recevant.

## Claims

1. A device for guiding and anchoring a vehicle seat, the said seat being removable relative to two longitudinal parallel glide bars (6) fixed to the floor, and being provided with an underframe composed of two lateral flanges (3, 4) each bearing means of positioning relative to the corresponding glide bar, means of guiding in translation - respectively transverse and longitudinal - relative to this glide bar, and means of bolting on to the glide bar, which means may be brought into an unbolting position by control means, **characterised in that** one of the flanges of the underframe, called the guide flange (3), bears the positioning means (19, 70), the guiding means (37, 38) and the bolting means (22) directly whereas, in the other flange called the adjusting flange (4), these same means are borne by one or two anchoring carriages (40, 41) mounted so as to be floating in transverse translation relative to the flange and on a course higher than the maximum value of the manufacturing tolerances and installation tolerances of the corresponding glide bar (6), the single carriage or one of these carriages (41) being connected to this flange (4) by a single transverse shaft (65) with the possibility of pivoting in the vertical plane in order to follow vertical-level variations of the surface (10a, 10b) of the glide bar (6) on which it rests.

2. A device according to Claim 1, **characterised in that** each of the floating anchoring carriages (40, 41) is associated with spring-return means (71, 75) permanently stressing it so as to return it to a median position on its means of guiding in transverse translation borne by the adjusting flange (4), that is, an articulation shaft (65) for the pivoting carriage (41) and two transverse shafts for the other carriage (40).

3. A device according to Claim 1, **characterised in that**, with glide bars (6) of U-shaped cross-section with two internal angled members (8a, 8b), the bolting means borne by the guide flange (3) and those borne by the floating carriages (40, 41) of the adjusting flange (4) consist of pivoting bolts (20, 120), each bolt being articulated about a shaft (s0) parallel to the longitudinal axis of the glide bar and provided with a lower end in the form of a hook (52), penetrating into the space between the wings (7a, 7b) of the glide bar (6) and co-operating with the one of the notches (53) provided in these wings.

4. A device according to Claim 3, **characterised in that** the end of each of the pivoting bolts (20, 120) that is in the form of a hook (52) is provided - to complement this hook - with a retaining slide bolt (54) capable of fitting beneath the corresponding internal angled member of the glide bar.

5. A device according to Claim 1, **characterised in that** [sic: to] each of the bolting means (20, 120) respectively of the guide flange (3) and of the adjusting flange (4) is associated with a pivoting hook (22, 122) for vertical retention, the said hook being articulated about a shall (44, 144) parallel to the longitudinal axis of the glide bar (6) and, by its lower end in the form of a hook (57), being capable of fitting beneath one of the internal angled members (7a, 7b) of the said glide bar (6).

6. A device according to all of Claims 1 to 5, **characterised in that** the control means for unbolting the pivoting bolts and the retaining hooks comprise, in each of the two flanges (3, 4), a control slide (23, 123) associated:
a) with spring means (24, 79) returning the said slide to the bolting position,
b) with means (93, 82) of adjustment into a withdrawal position unblockable by a presence sensor (88, 83) of the slide,
c) with an intermediate lever (26, 126) articulated relative to the flange (3, 4) about a transverse shaft (27), the lower end of this lever resting on the slide while its upper end is resting on manual-control means (30) common to the two flanges,
the said slide (23, 123) being positioned above the bolts (20, 120) and hooks (22, 122) and comprising holes (76, 77) the edges of which, arranged in the form of control ramps, co-operate with fingers (55, 58) projecting upwards from bolts (20, 120) and hooks (22, 122) respectively.

7. A device according to Claim 6, **characterised in that** each of the ramps (77) co-operating with the finger (58) of one of the retaining hooks (22, 122) comprises a longitudinal part (77a), without effect on the tilting of the hook and corresponding to the course of the slide for bringing the bolt from the bolting position to the unbolting position or vice versa, this longitudinal part (77a) being followed by an inclined part (77b) causing the hook to pivot from its retaining position to a position of disengagement favouring its withdrawal.

8. A device according to Claim 1, **characterised in that** the floating carriage (40), connected in rotation and longitudinal translation to the adjusting flange (4), bears a transverse cylindrical shaft (59) with an extreme cylindrical bearing surface (62) on which a wheel (60) capable of rolling along the glide bar (6) is mounted freely rotatably whereas the floating and hinged carriage (41) bears two transverse shafts (59) each provided with an extreme cylindrical bearing surface (62) on which a wheel (60) capable of rolling along the glide bar (6) is mounted freely rotatably, the cylindrical bearing surfaces (62) of the three transverse shafts (59) accommodating the wheels, which are off-centre relative to the geometric axis of the shaft, in order that the partial pivoting of each shaft (59) and then its blocking enable the corresponding wheel to be adjusted in its vertical position relative to the flange and thus to the seat.

9. A device according to Claim 8, **characterised in that** at least the wheels (60) equipping the carriages (40, 41) of the adjusting flange (4) form part of a series of wheels having the same bore diameter but differing from one another in their outer diameter, increasing from a value at most equal to that of the eccentricity (e) of the bearing surface (62) accommodating them.

## Patentansprüche

1. Vorrichtung zur Führung und zur Verankerung eines Fahrzeugsitzes, wobei der Sitz in bezug auf zwei am Boden befestigte parallele Längsgleitschienen (6) lösbar und mit einem Fußgestell versehen ist, das aus zwei Seitenflanschen (3, 4) besteht, die jeweils Mittel zur Positionierung in bezug auf die entsprechende Gleitschiene, Mittel zur Führung in einer Quer- bzw. einer Längsverschiebungsrichtung in bezug auf diese Gleitschiene und Mittel zur Verriegelung auf der Gleitschiene tragen, die von Steuermitteln in die Entriegelungsstellung gebracht werden können, **dadurch gekennzeichnet, daß** einer der Flansche des Fußgestells, Führungsflansch (3) genannt, die Positioniermittel (19, 70), die Führungsmittel (37, 38) und die Verriegelungsmittel (22) direkt trägt, während im anderen Flansch, Nachstellflansch (4) genannt, diese gleichen Mittel von einem oder zwei Verankerungsschlitten (40, 41) getragen werden, die in Querverschiebungsrichtung in bezug auf den Flansch und über eine Strecke, die größer ist als der maximale Wert der Herstellungs- und Montagetoleranzen der entsprechenden Gleitschiene (6), schwebend montiert sind, wobei der einzige Schlitten oder einer dieser Schlitten (41) mit diesem Flansch (4) über eine einzige Querachse (65) verbunden ist, mit der Möglichkeit des Schwenkens in der senkrechten Ebene, um den Veränderungen des senkrechten Niveaus der Fläche (10a, 10b) der Gleitschiene (6) zu folgen, auf der er aufliegt.

2. Vorrichtung nach Anspruch 1, **dadurch gekennzeichnet, daß** jeder der schwebenden Verankerungsschlitten (40, 41) Pederrückholmitteln (71, 75) zugeordnet ist, die ihn permanent beaufschlagen, um ihn in eine Mittelpösition auf seinen Querverschiebungs-Führungsmitteln zurückzuführen, die vom Nachstellflansch (4) getragen werden, d.h. einer Gelenkachse (65) für den schwenkenden Schlitten (41) und zwei Querachsen für den anderen Schlitten (40).

3. Vorrichtung nach Anspruch 1, **dadurch gekennzeichnet, daß** bei Gleitschienen (6), die im Querschnitt die Form eines "U" mit zwei inneren Einsprüngen (8a, 8b) aufweisen, die vom Führungsflansch (3) getragenen Verriegelungsmittel und die von den schwebenden Schlitten (40, 41) des Nachstellflanschs (4) getragenen verriegelungsmittel aus Schwenkriegeln (20, 120) bestehen, wobei jeder Riegel um eine Achse (50) parallel zur Längsachse der Gleitschiene angelenkt und mit einem unteren Ende in Form eines Hakens (52) versehen ist, der in den Zwischenraum zwischen den Schenkeln (7a, 7b) der Gleitschiene (6) eindringt und mit einer der in diesen Schenkeln ausgebildeten Aussparungen (53) zusammenwirkt.

4. Vorrichtung nach Anspruch 3, **dadurch gekennzeichnet, daß** das hakenförmige Ende (52) jedes Schwenkriegels (20, 120) zusätzlich zu diesem Haken mit einer Rückhalteklinke (54) versehen ist, die unter den entsprechenden inneren Einsprung der Gleitschiene kommen kann.

5. Vorrichtung nach Anspruch 1, **dadurch gekennzeichnet, daß** jedem Verriegelungsmittel (20, 120) des Führungsflanschs (3) bzw. des Nachstellflanschs (4) ein Schwenkhaken (22, 122) für den senkrechten Rückhalt zugeordnet ist, wobei der Haken um eine Achse (44, 144) parallel zur Längsachse der Gleitschiene (6) angelenkt ist und mit seinem unteren, hakenförmigen Ende (57) unter einen der inneren Einsprünge (7a, 7b) der Gleitschiene (6) kommen kann.

6. Vorrichtung nach der Gesamtheit der Ansprüche 1 bis 5, **dadurch gekennzeichnet, daß** die Entriegelungs-Steuermittel der Schwenkriegel und der Rückhaltehaken in jedem der beiden Flansche (3, 4) eine Steuerschiene (23, 123) aufweisen, die folgendem zugeordnet ist:
a) Federmitteln (24, 79), die sie in die Verriegelungsstellung zurückholen,
b) Mitteln (93, 82) zum Verkeilen in der Herausziehstellung, die von einem Taster (88, 83) zum Erfassen der Anwesenheit der Gleitschiene entblockt werden können,
c) einem Zwischenhebel (26, 126), der in bezug auf den Flansch (3, 4) um eine Querachse (27) angelenkt ist,
wobei das untere Ende dieses Hebels auf der Schiene aufliegt, während sein oberes Ende auf Mitteln (30) zur manuellen Steuerung aufliegt, die den beiden Flanschen gemeinsam sind,
wobei die Schiene (23, 123) oberhalb der Riegel (20, 120) und Haken (22, 122) angeordnet ist und Langlöcher (76, 77) aufweist, deren als Steuerrampen ausgebildete Ränder mit Fingern (55, 58) zusammenwirken, die ausgehend von den Riegeln (20, 120) bzw. den Haken (22, 122) nach oben vorstehen.

7. Vorrichtung nach Anspruch 6, **dadurch gekennzeichnet, daß** jede Rampe (77), die mit dem Finger (58) eines der Rückhaltehaken (22, 122) zusammenwirkt, einen Längsbereich (77a) aufweist, der keine Wirkung auf das Kippen des Hakens hat und dem Weg der Schiene entspricht, um den Riegel aus der Verriegelungsstellung in die Entriegelungsstellung oder umgekehrt zu bringen, wobei dieser Längsbereich (77a) von einem schrägen Bereich (77b) gefolgt wird, der den Haken aus seiner Rückhaltestellung in eine Freigabestellung schwenken läßt, die sein Herausziehen begünstigt.

8. Vorrichtung nach Anspruch 1, **dadurch gekennzeichnet, daß** der schwebende Schlitten (40), der dreh- und längsverschiebungsfest mit dem Nachstellflansch (4) verbunden ist, eine zylindrische Querachse (59) mit einer zylindrischen Endlagerfläche (62) trägt, auf die eine Rolle (60) frei drehbar montiert ist, die auf der Gleitschiene (6) rollen kann, während der schwebende und angelenkte Schlitten (41) zwei Querachsen (59) trägt, die jeweils mit einer zylindrischen Endlagerfläche (62) versehen sind, auf die eine Rolle (60) frei drehbar montiert ist, die auf der Gleitschiene (6) rollen kann, wobei die die Rollen aufnehmenden zylindrischen Lagerflächen (62) der drei Querachsen (59) exzentrisch in bezug auf die geometrische Achse der Achse sind, damit das teilweise Schwenken jeder Achse (59) und dann ihre Blockierung es ermöglichen, die senkrechte Stellung der entsprechenden Rolle in bezug auf den Flansch, d.h. auf den Sitz, einzustellen.

9. Vorrichtung nach Anspruch 8, **dadurch gekennzeichnet, daß** zumindest die die Schlitten (40, 41) des Nachstellflanschs (4) ausstattenden Rollen (60) Teil einer Reihe von Rollen sind, die den gleichen Bohrungsdurchmesser aufweisen, sich aber durch ihren Außendurchmesser unterscheiden, der ausgehend von einem Wert höchstens gleich demjenigen der Exzentrierung (e) der sie aufnehmenden zylindrischen Lagerfläche (62) ansteigt.
